**Europäisches Patentamt**

**European Patent Office**

**Office européen des brevets**

(19)

(11) Veröffentlichungsnummer : **0 486 765 B1**

# (12) EUROPÄISCHE PATENTSCHRIFT

(45) Veröffentlichungstag der Patentschrift :
**19.10.94 Patentblatt 94/42**

(51) Int. Cl.$^5$ : **F03D 7/02**

(21) Anmeldenummer : **91113402.1**

(22) Anmeldetag : **09.08.91**

(54) **Windkraftmaschine.**

(30) Priorität : **22.11.90 DE 9015887 U**

(43) Veröffentlichungstag der Anmeldung :
**27.05.92 Patentblatt 92/22**

(45) Bekanntmachung des Hinweises auf die
Patenterteilung :
**19.10.94 Patentblatt 94/42**

(84) Benannte Vertragsstaaten :
**BE DE DK FR NL SE**

(56) Entgegenhaltungen :
**BE-A- 902 092**
**FR-A- 678 780**
**FR-A- 2 355 178**

(73) Patentinhaber : **Mroz, Franz**
**Hohe Strasse 81-83**
**D-48249 Dülmen (DE)**

(72) Erfinder : **Mroz, Franz**
**Hohe Strasse 81-83**
**D-48249 Dülmen (DE)**

(74) Vertreter : **Hoffmeister, Helmut, Dr. Dipl.-Phys.**
**Patentanwalt**
**Goldstrasse 36**
**D-48147 Münster (DE)**

## Beschreibung

Die Erfindung betrifft eine Windkraftmaschine, mit einem Windrad, das vom Wind in Drehung versetzbar ist, einem Stromgenerator, der über eine Kraftübertragung vom Windrad antreibbar ist, und wenigstens eine Wirbelstrombremse, die das Windrad und den Stromgenerator bei bestimmten Betriebsbedingungen abzubremsen und zu regeln vermag, die aus wenigstens einer feststehenden Jochplatte mit daran angeordneten Spulen und einem Anker besteht.

Aus FR-A-2 355 178 ist eine Windkraftmaschine mit einem Windrad und einem Stromgenerator bekannt. Der Stromgenerator ist durch das Windrad antreibbar und in Drehung versetzbar. Kraftschlüssig in dem System ist eine Wirbelstrombremse angeordnet. Die Wirbelstrombremse besteht aus einem Rotor und einem Stator. Der Stator weist eine Reihe von Spulen auf. In einer Ausnehmung des Stators rotiert ein mit der Propellerhalterung verbundener Rotor-Vorsprung.

Hierdurch ist zwar eine Abbremsung und Regelung des Windrades und des Stromgenerators möglich, eine Haltebremsung aber nicht.

Weiterhin ist bekannt, Windkraftmaschinen mit Flügel- oder Trommel-Windrädern auf Betriebsbedingungen bei Starkwinden vorzubereiten, indem Bremsen vorgesehen werden, um das Windrad abzubremsen und festzustellen. Für derartige Bremssysteme sind mechanische Bremsen bekannt, die hydraulisch oder pneumatisch betätigt werden. Es hat sich gezeigt, daß durch die mechanischen Einwirkungen Blockierungen des Windrades eintreten, was zur Zerstörung der Rotorblätter, zur Überlastung der Getriebe, der Generatoren und damit zu Störungen der Gesamtanlage führt. Es treten auch erhebliche Temperaturen durch die Reibungswärme auf, die schon zu Bränden geführt haben.

In VEM-HANDBUCH Die Technik der elektrischen Antriebe, Grundlagen, 2. Auflage, Verlag Technik Berlin 1963, S. 187 - 191 und 336 338, ist beschrieben, die Drehzahlregelung elektrischer Maschinen mit steuerbaren Bremsen durchzuführen. Eingesetzt werden dabei Wirbelstrombremsen, die aus einem Stator und einem Rotor bestehen. Der Stator ist ähnlich einer Gleichstrommaschine aufgebaut, der eine Reihe von Polen mit wechselnder Polarität besitzt. Der Anker ist aus Messing, Bronze oder Aluminium.

Bei größeren Maschinen wird als Gefahr angesehen, daß beim Abschalten der Steuerspannung die Bremse als Einphasen-Motor weiterläuft. Deshalb sei dieses Verfahren für die meisten Anwendungsfälle in der Steuer- und Regelungstechnik unbrauchbar. Darüber hinaus wird angeführt, daß Wirbelstrombremsen im Stillstand kein Bremsmoment entwickeln und als Haltebremsen nicht verwendbar sind.

Ein ähnlich aufgebauter Regelantrieb wird in MASCHINEN-FABRIK STOMAG GmbH, Unna: Wirbelstromsysteme, Regelantriebe, S. 1 - 15, beschrieben. An den nach dem Wirbelstromprinzip arbeitenden Regelantrieb, bestehend aus Maschine und Wirbelstrombremse, ist deshalb eine zusätzliche Haltebremse angeflanscht. Sie dient als Sicherheitsbremse bei Stromausfall und wird als Arbeitsbremse eingesetzt, wenn mit Hilfe der Wirbelstrombremse bereits eine Schleichdrehzahl von 100 min$^{-1}$ erreicht wird.

Es stellt sich demnach die Aufgabe, derartige Windkraftmaschinen mit einem berührungslosen und verschleißfreien, in einfacher Weise anzuwendenden und zu steuernden Bremssystem zu versehen.

Diese Aufgabe wird dadurch gelöst, daß eine als Anker ausgebildete Volleisenscheibe unter Belassung eines Luftspaltes vor den Spulen rotiert, wodurch durch eine Anregung der Spulen mit einem Gleichstrom eine solche bremsende Kraft erzeugbar ist, daß die Windkraftmaschine nicht nur kontinuierlich und weich regelbar, sondern auch bis zum Stillstand abbremsbar und haltbar ist.

Ein besonderer Vorteil der erfindungsgemäßen Bremse ist, daß das Abbremsen berührungslos und praktisch verschleißfrei geschieht und daß zusätzlich durch Dosierung der Bremsleistung eine Drehzahlregulierung möglich ist. Durch die Ausbildung des Ankers als Volleisenscheibe mit davorliegenden auf der Jochplatte angeordneten Spulen ist es darüber hinaus möglich, die Bremse als Haltebremse einzusetzen. Damit können auch die mechanisch notwendigen Haltebremsen entfallen.

Vorteilhaft ist es, wenn das Windrad und die Kraftübertragung mit einer Welle verbunden ist.

Bei Windkraftgeneratoren kann auch ein polumschaltbarer Generator verwendet werden, der getrennte Wicklungen besitzt. Eine Wicklung wird bei Schwachwind und die andere bei normalem Wind als Hauptgenerator eingesetzt. Hier ergibt sich die Möglichkeit, die jeweils momentan freie Wicklung als Bremswicklung in Anspruch zu nehmen.

Vom Generator selbst mit Gleichrichter oder durch einen oder mehrere Akkumulatoren mit Aufladegerät ist es möglich, die Windkraftanlage und ihr Bremssystem stets in betriebstüchtigem Zustand, d. h. mit ausreichender Ladekapazität, aus eigenem Strombezug zu halten.

Üblicherweise ist bei Windkraftgeneratoren ein zweites getrenntes Bremssystem erforderlich. In diesem Falle kann das eine Bremssystem eine Wirbelstrombremse und das andere Bremssystem eine Wicklungsbremse sein. Beide können über eine Batteriestation oder über eine Gleichstrom-Netzversorgung betätigt werden. Es ist auch eine Parallelwirkung beider Bremssysteme durch eine integrierte Steuerung möglich.

Werden derartige, mit Induktionswirkung arbeitende Bremssysteme verwendet, so entfallen gegenüber üblichen Anlagen:
- der Schwachwindgenerator
- die aufwendigungen hydraulischen, pneumatischen und mechanischen Regel- und Bremseinrichtungen
- die Hydraulik- oder Pneumatikstation
- die Zuleitungssysteme
- die notwendigen mechanischen Haltebremsen
- und die entsprechende Wartung.

Außerdem wird nachweislich eine Verbesserung des Wirkungsgrades und der Wirtschaftlichkeit erreicht.

Die Erfindung wird nachstehend an einem Ausführungsbeispiel näher erläutert. Es zeigen:

Figur 1            eine schematische Ansicht einer Windkraftmaschine mit einer Brems- und Regeleinrichtung;
Figur 2            eine Steuerschaltung für eine Brems- und Regeleinrichtung;
Figur 3            eine Jochplatte mit Spulen einer Brems- und Regeleinrichtung gemäß Figur 1;
Figur 4            einer Anker einer Brems- und Regeleinrichtung gemäß Figur 1.

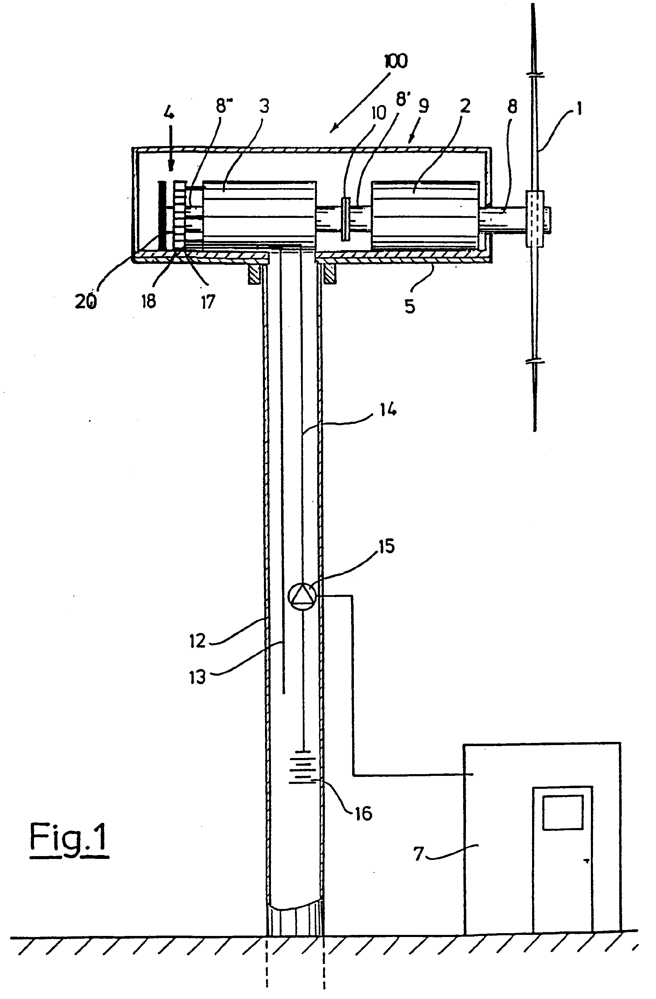

Eine Windkraftmaschine 100, die zur Erzeugung elektrischen Stroms dient, ist in der Figur 1 dargestellt. Ein Windrad 1 ist auf eine Hauptwelle 8 gesetzt, die in ein Gehäuse 9 hineinragt und mit einem Getriebe 2 verbunden ist, dessen Antriebswelle 8' über eine Kupplung 10 mit einem Generator 3 verbunden ist. Der Generator 3 wiederum hat eine Antriebswelle 8", die mit einer Wirbelstrombremse 4 verbunden ist. Hierbei ist es möglich, die Wirbelstrombremse 4 über eine weitere Kupplung mit der Welle 8" zu verbinden. Das Gehäuse 9 ist auf eine Plattform 5 gestellt, die auf einem Mast 12 drehbar angeordnet ist. Die vom Generator 3 erzeugte Leistung wird über eine Leitung 13 und entsprechende (nicht dargestellte) Übergangsschaltvorrichtungen in das elektrische Netz eingespeist. Eine Steuerung der Wirbelstrombremse 4 erfolgt über eine Leitung 14, die über ein Steuerelement 15 mit einer Batterie 16 verbunden ist. Die zur Steuerung erforderlichen Teile sind in einem Schaltschrank 7 vorgesehen.

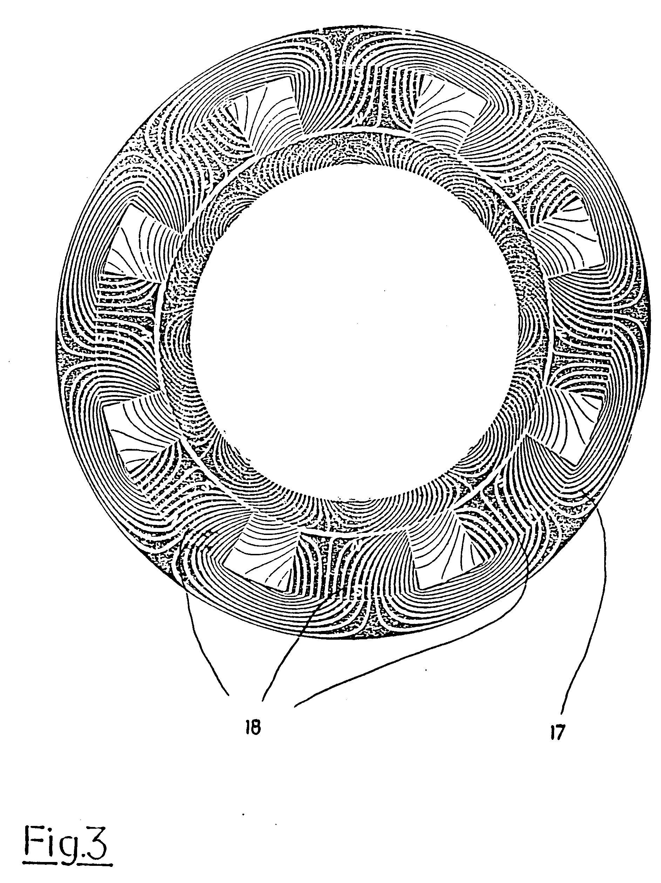

Die Wirbelstrombremse 4 als Brems- und Regeleinrichtung besteht grundsätzlich aus einem Erregersystem und einer Ankerscheibe. Nach Figur 1 stellt das Erregersystem eine Jochplatte 17 dar, die Spulen 18 trägt, während die Ankerscheibe ein Anker 20 in Form einer Eisenscheibe ist. Die Jochplatte 18 mit den Spulen 17 ist am Stator des Generators 3, der Anker 20 am Ende der Welle 8" des Rotors des Generators 3 befestigt. Ebenso kann die die Spulen 17 tragende Jochplatte 18 am Gehäuse des Getriebes 2 und der Anker 20 auf der Antriebswelle 8' angeordnet sein. Möglich ist auch die Anordnung zweier oder mehrerer derartiger Induktionsbremsen 4 einzeln oder nebeneinander an den genannten Stellen. Die Spulen 18 haben nach Figur 3 wechselnde Polarität. Sie werden von einem Gleichstrom erregt und erzeugen ein Magnetfeld B. Die Stärke des Magnetfeldes B ist abhängig von der Stärke des Gleichstromes. Vor den Spulen 18 rotiert unter Einhaltung eines Luftspaltes der Anker 20. Wird ein Leiter mit einer bestimmten Geschwindigkeit durch ein Magnetfeld bewegt, wird eine Spannung induziert und auf den bewegten Leiter wirkt eine die Bewegung hemmende Kraft. Durch das Drehen des Ankers 20 anstelle des Leiters durch das Magnetfeld B führt die induzierte Spannung zu Strömen, die sich innerhalb des Ankers 20 zu sogenannten Wirbelströmen schließen. Diese erzeugen eine bremsende Kraft $F_B$, die dem Quadrat des Magnetfeldes B mal Nenndrehzahl n proportional ist.

$$F_B \approx - B^2 \cdot n$$

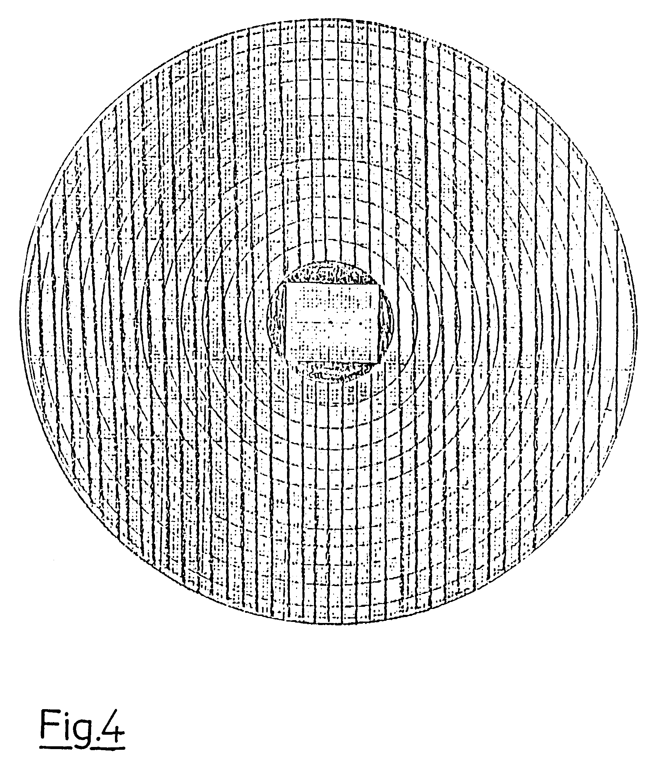

Das durch den Wind angetriebene Windrad 1 treibt über die Welle 8 das Getriebe 2 und über die Antriebswelle 8" den Generator 3 an, der entsprechend der Nenndrehzahl eine bestimmte Nennleistung abgibt. Übersteigt dieser einen vorbestimmten Wert, der z.B. bei 50 Hz einer bestimmten Spannung und einem bestimmten Strom entspricht, werden die Spulen 18 mit einem Strom beaufschlagt, der eine solche bremsende Kraft erzeugt, daß der Nennwert gehalten wird. Die Bremskraft kann auch soweit erhöht werden, daß das Windrad 1 zum Stillstand kommt. Dadurch ist es möglich, die Windkraftmaschine 100 kontinuierlich und weich zu regeln und bis zum Stillstand abzubremsen und zu halten. Die dabei freiwerdende Wärme wird von der Oberfläche des Ankers 20, deren besondere Ausgestaltung mit zusätzlichen Rippen in Figur 4 angedeutet werden soll, an die Außenluft äbgegeben. Die so gestaltete Wirbelstrombremse 4 eignet sich demnach nicht nur zum Abbremsen großer Leistungen. Sie ist darüberhinaus noch in der Lage, im Stillstand ein solches Bremsmoment zu entwickeln, daß sie als Haltebremse verwendbar ist.

Um den Anker 20 kann noch ein Kühlmantel (nicht dargestellt) angeordnet sein, der mit Hilfe des ihn durchströmenden Wassers die entstehende Induktionswärme abführt. Das erwärmte Wasser kann zum Heizen verwendet werden.

Zusätzlich zu der angeordneten Wirbelstrombremse 4 kann der Generator 3 so geschaltet werden, daß er mit einem induktiv wirkenden Bremssystem versehen ist. Hierbei kann es sich um einen polumschaltbaren Generator handeln. Jeweils eine der beiden von den Wicklungen kann als Bremswicklung verwendet werden, in dem ein entgegen der Umlaufrichtung wirkender Gleichstrom durch die Wicklung geschickt wird. Auch hier ist eine Steuerung möglich.

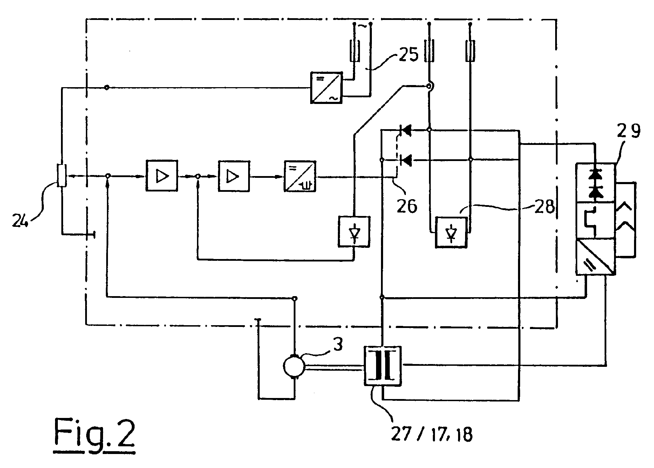

Mit Hilfe einer Spannungs - oder Stromregelung gemäß Figur 2 läßt sich die Drehzahl regeln. Ein Sollwertgeber 24 wird von einem Fühler 25 beaufschlagt. Der Istwert wird über einen entsprechenden Drehzahlfühler beim Generator 3 abgetastet. Der Drehzahlunterschied wird über einen Drehzahlregler, Stromregler, Impulserzeuger und einer Regel- und Bremselektronik 29 dazu verwendet, zwei Thyristoren 26 zu steuern, die die Induktionsspulen 27 steuern, die sich beispielsweise in der momentan nicht benötigten Wicklung des Generators oder aber in einer gesonderten Wirbelstrombremse befinden. Es kann sich demnach auch um die Spulen 17, 18 handeln, wie bereits erläutert. Darüber hinaus kann noch ein Überspannungsschutz 28 vorgesehen sein, mit dem ebenfalls der Stromregler beaufschlagt werden kann, so daß beispielsweise bei Überlast ebenfalls die Induktionsspulen angesprochen werden.

Es sei demnach herausgestellt, daß sich das Bremssystem auf der Getriebe- oder Generatorwelle (8′ bzw. 8″) befindet. Das erforderliche Bremsmoment ist mechanisch und elektrisch der jeweiligen Generatorleistung angepaßt. Sollte eine Vollbremsung beispielsweie bei Überlast notwendig sein, so wird der Bremsgarnitur die volle elektrische Leitenergie zugeleitet. Zur Drehzahlfeinregulierung wird den Induktionsspulen der Wirbelstrombremse jeweils eine spezifische und geregelte Teilenergie zugeführt, die der Windstärke und der Nenndrehzahl anzupassen ist.

Bei einer Fremdkühlung, die gleichzeitig zur Erzeugung von Heizenergie dienen kann, und bei entsprechender Auslegung des Reglersystems kann ein Dauerbetrieb ohne zusätzliche Eingriffe gewährleistet werden. Die Energie für die Steuerung der Wirbelstrombremsen kann dem Generator 3 in Zusammenschaltung mit einem Gleichrichter bzw. üblichen Gleichstrom-Akkumulatoren entnommen werden. Bei mehreren Windrädern können entsprechend mehrere Systeme auch gekoppelt werden.

Da üblicherweise zwei unabhängige Bremssysteme vorhanden sein müssen, wird das zweite System in den Generator selbst verlegt, und zwar als eine Wicklung des polumschaltbaren Generators, wobei die zugeführte Energie der jeweiligen Generatorgröße anzupassen ist. Eine verschleißfreie Brems- und Regelwirkung ist mit diesem System gewährleistet und vereinfacht den Bau derartiger Windkraftanlagen wesentlich.

Beide möglichen Bremssysteme sind daher nebeneinander nutzbar.


**Patentansprüche**

1.  Windkraftmaschine, mit
    - einem Windrad (1), das vom Wind in Drehung versetzbar ist,
    - einem Stromgenerator (3), der über eine Kraftübertragung vom Windrad antreibbar ist, und
    - wenigstens einer Wirbelstrombremse (4), die das Windrad (1) und den Stromgenerator (5) bei bestimmten Betriebsbedingungen abzubremsen und zu regeln vermag, die aus
    - wenigstens einer feststehenden Jochplatte (17) mit daran angeordneten Spulen (18) und
    - einem Anker besteht,
    dadurch gekennzeichnet, daß eine als Anker (20) ausgebildete Volleisenscheibe unter Belassung eines Luftspaltes vor den Spulen (18) rotiert, wodurch durch eine Anregung der Spulen (18) mit einem Gleichstrom eine solche bemsende Kraft erzeugbar ist, daß die Windkraftmaschine (100) nicht nur kontinuierlich und weich regelbar, sondern auch bis zum Stillstand abbremsbar und haltbar ist.

2.  Windkraftmaschine nach Anspruch 1, dadurch gekennzeichnet, daß das Windrad (10) und die Kraftübertragung (Getriebe 2) mit einer Welle (8, 8′, 8″) verbunden ist.

3.  Windkraftmaschine nach Anspruch 1, dadurch gekennzeichnet, daß die Eisenscheibe am Ende der Welle (8″) des Rotors des Generators (3) oder auf der Antriebswelle (8′) angeordnet ist.

4.  Windkraftmaschine nach Anspruch 1, dadurch gekennzeichnet, daß eine momentan freie Wicklung des Generators (3) als Bremswicklung (27) geschaltet ist.

5.  Windkraftmaschine nach Anspruch 1 bis 4, dadurch gekennzeichnet, daß wenigstens eine der Bremsen an eine Gleichstromquelle (16) angeordnet ist.

6.  Windkraftmaschine nach Anspruch 5, dadurch gekennzeichnet, daß der Ausgangsstrom der Gleichstromquelle (16) steuerbar ist.

7.  Windkraftmaschine nach Anspruch 6, dadurch gekennzeichnet, daß die Steuerung der Gleichstromquelle (16) mit Hilfe eines die Windgeschwindigkeit berücksichtigenden Regelschaltkreises erfolgt.

8. Windkraftmaschine nach Anspruch 6 und 7, dadurch gekennzeichnet, daß die Steuerung der Gleichstromquelle (16) für die Brems- und Regelfunktion den Leistungswerten des Generators (3) entspricht, wobei die notwenige Energie dem Generator (3) oder der Gleichstromquelle (16) entnehmbar ist.

**Claims**

1. A wind power engine, comprising
   - a wind wheel (1), which can be caused to rotate by the wind,
   - a current generator (3), which can be driven by means of a transmission of power by the wind wheel, and
   - at least one eddy-current brake (4) which is capable of braking and controlling the wind wheel (1) and the current generator (5) under certain operating conditions, which brake consists of
   - at least one stationary yoke plate (17) with coils (18) located thereon and
   - an armature,
   characterised in that a solid iron disc designed as an armature (20) rotates leaving an air gap in front of the coils (18), by means of which, by exciting the coils (18) with a direct current, such a braking force can be produced that the wind power engine (100) is not only continuously and gently controllable, but also can be braked to and held at a standstill.

2. A wind power engine according to Claim 1, characterised in that the wind wheel (10) and the power transmission means (gear 2) are connected to a shaft (8, 8′, 8″).

3. A wind power engine according to Claim 1, characterised in that the iron disc is located on the end of the shaft (8″) of the rotor of the generator (3) or on the drive shaft (8′).

4. A wind power engine according to Claim 1, characterised in that a momentarily free winding of the generator (3) is switched as a braking winding (27).

5. A wind power engine according to Claims 1 to 4, characterised in that at least one of the brakes is located at a direct-current source (16).

6. A wind power engine according to Claim 5, characterised in that the output current of the direct-current source (16) is controllable.

7. A wind power engine according to Claim 6, characterised in that the direct-current source (16) is controlled with the aid of a control circuit which takes into account the wind speed.

8. A wind power engine according to Claims 6 and 7, characterised in that the direct-current source (16) for the braking and control function is controlled corresponding to the performance data of the generator (3), with the necessary energy being able to be taken from the generator (3) or the direct-current source (16).

**Revendications**

1. Eolienne comprenant
   - une roue à palettes (1) qui peut être entraînée en rotation par le vent,
   - un générateur de courant (3) qui peut être entraîné par la roue à palettes par l'intermédiaire d'une transmission, et
   - au moins un frein à courants de Foucault (4) qui est en mesure de freiner et de réguler la roue à palettes (1) et le générateur de courant (3) dans certaines conditions opératoires et est constitué
   - d'au moins une plaque de culasse (17) fixe sur laquelle sont disposées des bobines (18) et
   - d'un induit,
   caractérisée par le fait qu'un disque en acier plein réalisé sous forme d'induit (20) tourne devant les bobines (18) en laissant subsister un entrefer, une excitation des bobines (18) avec un courant continu permettant ainsi de produire une force de freinage telle que l'éolienne (100) peut non seulement être réglée en continu et en douceur mais également être freinée jusqu'à l'arrêt et y être maintenue.

2. Eolienne selon la revendication 1, caractérisée par le fait que la roue à palettes (10) et la transmission (engrenage 2) sont reliées à un arbre (8, 8′, 8″).

3. Eolienne selon la revendication 1, **caractérisée** par le fait que le disque en acier est disposé à l'extrémité de l'arbre (8″) du rotor du générateur (3) ou sur l'arbre d'entraînement (8′).

4. Eolienne selon la revendication 1, **caractérisée** par le fait qu'un enroulement momentanément libre du générateur (3) est utilisé comme enroulement de freinage (27).

5. Eolienne selon les revendications 1 à 4, **caractérisée** par le fait qu'au moins l'un des freins est disposé sur une source de courant continu (16).

6. Eolienne selon la revendication 5, **caractérisée** par le fait que le courant de sortie de la source de courant continu (16) peut être modulé.

7. Eolienne selon la revendication 6, **caractérisée** par le fait que la commande de la source de courant continu (16) s'effectue à l'aide d'un circuit de réglage qui tient compte de la vitesse du vent.

8. Eolienne selon les revendications 6 et 7, **caractérisée** par le fait que la commande de la source de courant continu (16) pour la fonction de freinage et de réglage correspond aux valeurs de puissance du générateur (3), l'énergie nécessaire pouvant être prélevée du générateur (3) ou de la source de courant continu (16).

Fig.1

Fig.2

18          17

Fig.3

Fig.4